# EUROPÄISCHE PATENTANMELDUNG

(11) **EP 2 014 364 A1**
(43) Veröffentlichungstag der Anmeldung: **14.01.2009**
(21) Anmeldenummer: 07075560.8
(22) Anmeldetag: 04.07.2007
(51) Int. Cl.: B01L 1/00

(54) **Vorrichtung und Verfahren zur Übertragung linearer Bewegungen**

(71) Anmelder: Technische Fachhochschule Wildau, 15745 Wildau (DE)
(72) Erfinder: Siemroth, Karin, 15711 Königs Wusterhausen (DE)
(74) Vertreter: Schubert, Klemens

(57) **Zusammenfassung**

Die Erfindung betrifft eine Vorrichtung (1), ein Verfahren und die Verwendung der Vorrichtung zur Übertragung linearer Bewegungen. Die Vorrichtung besteht aus einem Hohlzylinder (2), in dem sich ein Druckraum befindet, wobei der Druckraum begrenzt ist durch einen Anschlussflansch (5), der an einer terminalen Öffnung des Hohlzylinders fixiert ist, und einen beweglichen Kolbenflansch (7), der druckdicht an der Innenseite der Zylinderwand des Hohlzylinders anliegt und wobei der Anschlussflansch und der Kolbenflansch mittels eines reversibel deformierbaren Bauteils (4) miteinander verbunden sind.

## Beschreibung

Die Erfindung betrifft eine Vorrichtung und ein Verfahren zur Übertragung linearer Bewegungen. Des Weiteren betrifft die Erfindung eine Verwendung der Vorrichtung.

Ein Eingriff in einen Prozess, der in einer Vakuumkammer abläuft, ist häufig mit einer Beeinträchtigung des Vakuums in der Vakuumkammer verbunden.

Eine lineare Bewegung in ein Vakuum hinein oder aus einem Vakuum heraus ist mit einer Schiebedurchführung, einem Faltenbalg, einem Pneumatikzylinder, einem Linearmotor und axialen Führungen möglich. Häufig nehmen die bekannten Vorrichtungen einen relativ großen Platz in Anspruch. Zudem muss der Bewegungshub, der bei einer Schiebedurchführung, einem Faltenbalg oder einem Zylinder benötigt wird, und die Baulänge der einzelnen Bauteile als Platz-bedarf berücksichtigt werden.

Ein weiterer Nachteil der Verwendung von Schiebedurchführungen ist, dass es bei ihnen zu Leckverlusten kommt.

Linearmotoren oder Pneumatik-/Hydraulikzylinder sind für Bewegungen, nicht aber für ein längeres konstantes Aufbringen von Kräften geeignet.

Außerdem ist eine zusätzliche Führung notwendig, um Kräfte querkraftfrei auf einen Faltenbalg zu übertragen.

Für die Erzeugung der erforderlichen Kräfte u. a. auch gegen den Luftdruck, sind relativ große Pneumatik- / Hydraulikzylinder oder Elektromotoren nötig, die konstruktiv aufwendig mit dem Faltenbalg und dem Vakuumgehäuse verbunden werden müssen.

Aufgabe der Erfindung ist es daher, eine einfache und platzsparende Lösung zu finden, mit der man lineare Bewegungen in guter axialer Führungsgenauigkeit ohne Leckverluste in Bereiche mit Hochvakuum übertragen und eine definierte Haltekraft über einen längeren Zeitraum aufbringen kann.

Die Aufgabe der vorliegenden Erfindung wird durch eine Vorrichtung gelöst, die aus einem Hohlzylinder besteht, in dem sich ein Druckraum befindet, wobei der Druckraum begrenzt ist durch einen Anschlussflansch, der an einer terminalen Öffnung des Hohlzylinders fixiert ist, und einen beweglichen Kolbenflansch, der druckdicht an der Innenseite der Zylinderwand (innere Mantelfläche) des Hohlzylinders anliegt und wobei der Anschlussflansch und der Kolbenflansch mittels eines in Achsrichtung reversibel deformierbaren Bauteils miteinander verbunden sind.

Durch die erfindungsgemäße Vorrichtung wird eine axiale Führung gewährleistet.

Die erfindungsgemäße Vorrichtung arbeitet leckfrei. Die integrierte Bauweise hat den Vorteil, dass sie eine geringe Baugröße besitzt und zudem einfach aufgebaut ist.

Das in Achsrichtung reversibel deformierbare Bauteil besteht vorzugsweise vollständig oder teilweise aus einem gut reversibel deformierbaren Material. Dieses Material ermöglicht es, durch eine longitudinale Ausdehnung beziehungsweise durch eine Kontraktion eine axiale Bewegung des Kolbenflansches im Hohlzylinder zu bewirken. Das Material muss so ausgewählt sein, dass es nicht durch den Druckunterschied zwischen Druckraum und Innenraum des deformierbaren Bauteils in sich zusammenfällt.

Der durch den Hohlraum gebildete Innenraum des reversibel deformierbaren Bauteils weist im Wesentlichen die Form eines Zylinders, Hexaeders, Quaders oder Prismas auf.

In einer besonders bevorzugten Ausführungsform der Erfindung ist das reversibel deformierbare Bauteil ein Faltenbalg. Faltenbälge sind für das Arbeiten im Vakuum besonders gut geeignet, da sie sich, außer in der gewünschten longitudinalen Richtung, kaum deformieren und einem Druckgefälle gut standhalten.

Das reversibel deformierbare Bauteil kann jedoch auch aus mehreren Teilen aufgebaut sein.

In einer bevorzugten Ausführungsform besteht das reversibel deformierbare Bauteil aus mindestens drei Teilen, wobei zwei nicht deformierbare Teile jeweils mit einem Ende eines deformierbaren Teils verbunden sind und ein nicht deformierbares Teil mit dem Anschlussflansch und das zweite nicht deformierbare Teil mit dem beweglichen Kolbenflansch verbunden ist.

Durch das deformierbare Teil kann sich das reversibel deformierbare Bauteil in longitudinaler Richtung ausdehnen und wieder zusammenziehen. Die nicht deformierbaren, starren Teile dienen der Befestigung des deformierbaren Teils des Bauteils an dem Anschlussflansch und dem Kolbenflansch.

Die lineare Bewegung erfolgt durch eine Änderung des Drucks im Druckraum. Durch einen höheren Druck im Druckraum dehnt sich das Bauteil beziehungsweise das reversibel dehnbare Teil des Bauteils (zum Beispiel ein Faltenbalg), longitudinal aus. Wird der Druck vermindert, so zieht sich das Bauteil wieder zusammen.

Eine axiale Bewegung des Kolbenflansches im Hohlzylinder kann aber auch durch eine Druckänderung im Innenraum des reversibel deformierbaren Bauteils hervorgerufen werden.

Die Kraft zum Spannen und Halten eines beliebigen Bauteils im Vakuum kann durch den atmosphärischen Druck aufgebaut werden. Die kurzzeitig erforderliche Lösekraft wird bereits durch einen geringen Überdruck in der Druckkammer erzeugt. Diesem Überdruck kann das reversibel deformierbare Bauteil (beispielsweise ein Faltenbalg) standhalten.

Die Vorrichtung ist vorzugsweise mittels des Anschlussflansches oder eines terminalen Endes des Hohlzylinders an einem Behälter fixierbar. Hierzu wird der Anschlussflansch mittels Verschweißen, Kleben, Schrauben, Klammern, Crimpen oder anderer geeigneter Befestigungsmöglichkeiten an dem Behälter fixiert.

Normalerweise dient der Anschlussflansch zur Verbindung der Vorrichtung mit einem Behälter. Es ist aber auch möglich, dass die Vorrichtung mit einem terminalen Ende des Hohlzylinders eine druckdichte Verbindung mit einem Behälter eingeht. Eine solche Verbindung kann durch einen weiteren Flansch, der Behälter und Vorrichtung verbindet, oder durch eine feste Installation der Vorrichtung in oder an einem Behälter geschaffen werden.

Der Behälter ist vorzugsweise eine Vakuumkammer.

Durch den Anschlussflansch lässt sich die erfindungsgemä-ße Vorrichtung leicht, beispielsweise durch eine Verschraubung oder einen Bajonettverschluss, an einem Behälter fixieren.

Der Anschlussflansch weist vorzugsweise eine (innere) Öffnung auf, wodurch eine Übertragung einer Bewegung in den Behälter (bzw. die Vakuumkammer) hinein ermöglicht wird.

Als Anschlussflansch kann ein Normflansch, beispielsweise ein ISO K- oder ISO CF-Flansch verwendet werden.

Durch die erfindungsgemäße Vorrichtung werden lineare Bewegungen in ein Vakuum hinein ermöglicht. So ist es durch die Vorrichtung möglich, Bewegungen, wie zum Beispiel die Betätigung eines Schalters oder das Verstellen eines Spiegels oder das Spannen eines Teils, in einer Vakuumkammer auszuführen. Hierbei kann ein am Kolbenflansch befestigter Stift, der in den Behälter hineinragt, als Aktuator dienen. Durch die Bewegung des Kolbenflansches wird der Stift linear durch die Vorrichtung geführt und kann im Behälter, durch Druckveränderung im Druckraum oder im Innenraum des deformierbaren Bauteils, Bewegungen ausführen, wie zum Beispiel einen Schalter betätigen oder Proben im Behälter bewegen.

Vorzugsweise weist auch der Kolbenflansch eine (äußere) Öffnung auf. Hierdurch wird ein Anbringen von speziellen Flanschen oder die Befestigung von elektrischen oder anderen Durchführungen ermöglicht.

Am Kolbenflansch ist vorzugsweise mindestens ein Anschluss vorgesehen, wie zum Beispiel ein ISO K oder ein ISO CF. An diesem Anschluss können die für die jeweilige Tätigkeit geeigneten Flansche am Kolbenflansch fixiert werden.

Des Weiteren ermöglicht es der Anschluss, dass weitere Geräte an die Vorrichtung angeflanscht werden können.

Die Flanschbezeichnungen ISO K und ISO CF stehen für genormte Anschlüsse in vorgegebener Nennweite, es können aber auch individuelle Flanschformen und Flanschmaße verwendet werden.

Der Anschluss ist vorzugsweise ein Gewinde, eine Steckverbindung, ein Bajonettverschluss, eine Verschraubung oder eine andere lösbare Verbindung mit einer Vakuumabdichtung.

Der Kolbenflansch bildet mit der Innenseite des Hohlzylinders eine druckdichte Verbindung. Um den gleitenden Kolbenflansch abzudichten, ist der Kolbenflansch beispielsweise mit umlaufenden Nuten versehen, in welche O-Ringe als Dichtungen eingelegt sind. Auch andere Abdichtungen von aufeinander gleitenden Flächen können verwendet werden.

Der Kolbenring des Kolbenflansches kann hierzu mit einem Material mit guten Gleiteigenschaften versehen werden. Durch die Verwendung unterschiedlicher Materialien der Kolbendichtungen kann man die Gleiteigenschaften des Kolbenflansches positiv beeinflussen. Der Kolbenring kann auch mit einem Schmiermittel versehen sein.

Der Kolbenflansch kann aus einem Stück gefertigt werden. Bevorzugt besteht der Kolbenflansch jedoch aus einem Kolben und mindestens einem Flansch. Diese zweiteilige beziehungsweise mehrteilige Ausführungsform des Kolbenflansches hat den Vorteil, dass sie die Wartung erleichtert. Außerdem wird hierdurch die Funktionalität erhöht. Kolbendichtringe dienen zur Abdichtung zwischen dem Kolben des Kolbenflansches und der Innenseite des Hohlzylinders.

Bevorzugt weist die Zylinderwand des Hohlzylinders im Bereich des Druckraums eine Öffnung auf. Durch diese Öffnung kann ein Gas oder eine Flüssigkeit in den Druckraum hinein- beziehungsweise aus dem Druckraum herausgeleitet werden.

Die erfindungsgemäße Vorrichtung besteht aus Materialien, die in der Lage sind, den in der Vorrichtung auftretenden Druckschwankungen standzuhalten. Stahl, insbesondere Edelstahl, ist ein geeignetes Material für den Hohlzylinder und die Flansche der erfindungsgemäßen Vorrichtung. Auch andere dem Fachmann bekannte Materialien, die für die hierin beschriebenen Anwendungen geeignet sind, zum Beispiel Kunststoffe wie Polytetrafluorethylen (Teflon^{®}), Metalllegierungen wie Aluminium- oder Magnesiumlegierungen, und Metalle wie Aluminium können zur Herstellung verwendet werden.

Das reversibel deformierbare Bauteil wird zum Beispiel aus Metallen wie Stahl, Metalllegierungen, Kunststoffen wie Silikon, Gummi und/oder anderen für die jeweilige Anwendung geeigneten Materialien hergestellt.

Die Dichtungen werden aus Metallen wie Buntmetallen, Kunststoffen wie Silikon, Gummi und/oder anderen für die jeweiligen Anwendungen geeigneten Materialien hergestellt.

Die Werkstücke der erfindungsgemäßen Vorrichtung können gefräst, gedreht, geprägt, extrudiert, gegossen oder in anderer Weise umgeformt sein oder mittels anderer dem Fachmann bekannter Verfahren hergestellt sein.

Des Weiteren wird die Aufgabe der vorliegenden Erfindung durch ein Verfahren zur Übertragung einer linearen Bewegung gelöst, wobei man durch eine Änderung der Druckverhältnisse im Druckraum und/oder im Innenraum des reversibel deformierbaren Bauteils und/oder im Innenraum eines an die Vorrichtung angeschlossenen Behälters eine Bewegung des Kolbenflansches im Hohlzylinder erzeugt.

Die Änderung der Druckverhältnisse im Druckraum erzeugt man vorzugsweise durch Absaugen von oder Beaufschlagen mit Gas oder einer Flüssigkeit durch die Öffnung in der Zylinderwand hindurch.

Die Druckänderung kann mittels einer Pumpe vorgenommen werden. Durch eine Pumpe kann ein Gas (beispielsweise Luft), ein Gel oder eine Flüssigkeit (beispielsweise ein Hydrauliköl) durch die Öffnung in der Zylinderwand des Hohlzylinders in den Druckraum der Vorrichtung gepumpt werden, wodurch der Kolbenflansch vom Behälter wegbewegt und das reversibel deformierbare Bauteil gedehnt wird. Ein an dem Kolbenflansch direkt oder über einen weiteren Flansch befestigter Aktuator (z.B. ein Stift) oder ein beliebiger weiterer Flansch wird mit dem Kolbenflansch bewegt und führt dabei die gewünschte lineare Bewegung aus.

Die Geschwindigkeit und Richtung der linearen Bewegung steuert man bevorzugt über die Einstellung des Drucks im Druckraum. Durch Ablassen oder Abpumpen des Gases oder der Flüssigkeit aus dem Druckraum wird der Druck im Druckraum vermindert und der Kolbenflansch bewegt sich in Richtung des Anschlussflansches. Wird der Druck im Druckraum erhöht, so bewegt sich der Kolbenflansch in die entgegengesetzte Richtung (vom Anschlussflansch weg). Die Geschwindigkeit, mit der man das Gas oder die Flüssigkeit in den Druckraum pumpt, hat Einfluss auf die Geschwindigkeit, mit der sich der Kolbenflansch bewegt, und somit auch darauf, wie schnell eine lineare Bewegung in der Vorrichtung ausgeführt wird.

Weiter bevorzugt steuert man die Geschwindigkeit und Richtung der linearen Bewegung, über die Einstellung des Drucks im Innenraum des reversibel deformierbaren Bauteils und/oder im Innenraum eines an die Vorrichtung angeschlossenen Behälters. Durch Ablassen oder Abpumpen des Gases oder der Flüssigkeit aus dem Innenraum des reversibel deformierbaren Bauteils und/oder dem Innenraum eines an die Vorrichtung angeschlossenen Behälters, wird der Druck darin vermindert und der Kolbenflansch bewegt sich in Richtung des angeschlossenen Behälters. Wird der Druck erhöht, so bewegt sich der Kolbenflansch in die entgegengesetzte Richtung (vom angeschlossenen Behälter weg). Die Geschwindigkeit, mit der man das Gas oder die Flüssigkeit in den Innenraum des reversibel deformierbaren Bauteils und/oder im Innenraum eines an die Vorrichtung angeschlossenen Behälters pumpt, hat Einfluss auf die Geschwindigkeit, mit der sich der Kolbenflansch bewegt, und somit auch darauf, wie schnell eine lineare Bewegung in der Vorrichtung ausgeführt wird.

Weiterhin wird die Aufgabe der vorliegenden Erfindung durch eine Verwendung der erfindungsgemäßen Vorrichtung zur Übertragung von linearen Bewegungen in beispielsweise Vakuumapparaturen gelöst.

Die erfindungsgemäße Vorrichtung kann somit als Standardbauteil für Vakuumdurchführungen zur Durchführung von Linearbewegungen verwendet werden.

Im Folgenden wird die Erfindung anhand von Figuren näher beschrieben. Im Einzelnen zeigt
- Figur 1: einen Querschnitt durch eine erste erfindungsgemäße Vorrichtung,
- Figur 2: einen Querschnitt durch eine weitere Ausführungsform der erfindungsgemäßen Vorrichtung,
- Figur 3: eine dreidimensionale Darstellung der in Figur 2 gezeigten erfindungsgemäßen Vorrichtung und
- Figur 4: eine weitere dreidimensionale Darstellung der in Figur 2 und 3 gezeigten erfindungsgemäßen Vorrichtung.

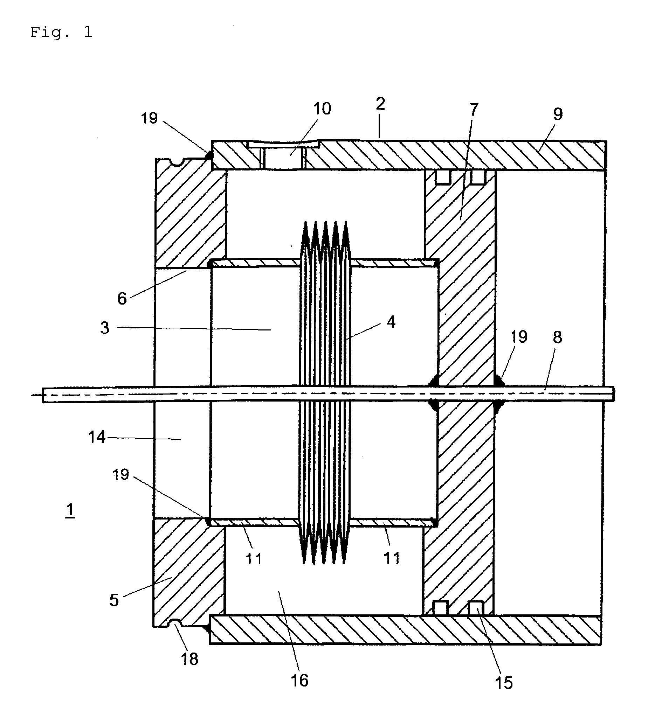

Die Figur 1 zeigt einen Querschnitt durch eine Vorrichtung 1 zur Übertragung linearer Bewegungen. Die Vorrichtung 1 besteht aus einem Hohlzylinder 2 und einem zwischen einem Anschlussflansch 5 und einem Kolbenflansch 7 angeordneten Bauteil 3, das aus zwei nicht deformierbaren Teilen 11 besteht, die durch einen Faltenbalg 4 miteinander verbunden sind. Die nicht deformierbaren Teile 11 sind, um eine druckdichte Verbindung zu schaffen, mit dem Anschlussflansch 5 und dem Kolbenflansch 7 verschweißt (Schweißnaht 19). Auch andere Verbindungsmöglichkeiten, wie Schrauben, Kleben, Löten oder Crimpen, sind geeignet.

Der Anschlussflansch 5 dient der Befestigung der Vorrichtung 1 an einem Behälter (beispielsweise an einer Vakuumkammer). Der Anschlussflansch 5 ist derart ausgebildet, dass er mittels einer Verschraubung, eines Bajonettverschlusses oder ähnlicher Mittel eine druckdichte Verbindung mit der Vakuumkammer ermöglicht. Ferner ist der Anschlussflansch 5 mit dem Hohlzylinder 2 verschweißt (Schweißnaht 19). Auch andere Verbindungsmöglichkeiten, wie Schweißen, Kleben, Löten oder Crimpen, sind geeignet. Es sind aber auch Ausführungsformen denkbar, bei denen der Anschlussflansch 5 und der Hohlzylinder 2 durch andere Mittel, beispielsweise durch eine druckdichte Verschraubung oder einen Bajonettverschluss, miteinander verbunden sind.

Im Inneren weist der Anschlussflansch 5 mittig eine Öffnung 14 auf. Am Rand 6 der Öffnung 14 ist das reversible deformierbare Bauteil 3 fixiert. Der vakuumseitige Teil 11 des Bauteils 3 ist mit dem Anschlussflansch 5 druckdicht, zum Beispiel durch eine Verschweißung (Schweißnaht 19), verbunden. Auch andere Verbindungsmöglichkeiten, wie Schrauben, Kleben, Löten oder Crimpen, sind geeignet. Es ist jedoch auch möglich, dass der vakuumseitige Teil 11 des reversibel deformierbaren Bauteils 3 ein Teil des Anschlussflansches 5 ist.

Der bewegliche Kolbenflansch 7 entspricht in seinem Durchmesser ungefähr dem des inneren Durchmessers des Hohlzylinders 2, so dass der Kolbenflansch 7 passgenau in den Hohlzylinder 2 eingeführt werden kann. Durch den Kolbenflansch 7 verläuft mittig ein Stift 8, der bis in einen an der Vorrichtung 1 angeschlossenen Behälter hineinreicht.

Der Kolbenflansch 7 ist mit dem Stift 8 und der Innenseite des Hohlzylinders 2 druckdicht verbunden. Hierzu ist der Stift 8 mit dem Kolbenflansch 7 verschweißt (Schweißnaht 19). Auch andere Verbindungsmöglichkeiten, wie Schrauben, Kleben, Löten oder Crimpen, sind geeignet.

Vakuumseitig ist der Kolbenflansch 7 mit dem reversibel deformierbaren Bauteil 3 fixiert. Das Bauteil 3 kann ein Teil des Kolbenflansches 7 sein oder mit diesem reversibel verbunden sein.

Durch einen Unterdruck im Druckraum 16 wird der Faltenbalg 4 zusammengedrückt. Herrscht ein Überdruck, so dehnt sich der Faltenbalg 4 longitudinal aus, so dass der mittig durch die gesamte Vorrichtung 1 (Faltenbalgzylinder) geführte Stift 8 eine Linearbewegung ausführt.

Durch die Öffnung 10 in der Zylinderwand 9 kann im Druckraum 16 ein Überdruck oder ein Unterdruck aufgebaut werden. Hierzu kann an die Öffnung 10 eine Pumpe (beispielsweise eine Vakuumpumpe) angeschlossen werden.

Des Weiteren kann die Vorrichtung 1 durch eine Druckänderung im Innenraum des deformierbaren Bauteils 3 gesteuert werden. Ist die Vorrichtung 1 an einen Behälter, wie zum Beispiel eine Vakuumkammer, angeschlossen, führen auch Änderungen des Drucks in dem Behälter zu einer Bewegung des Kolbenflansches 7.

Es gibt somit zwei Druckräume, in denen durch Druckunterschiede eine Bewegung des Kolbenflansches 7 bewirkt werden kann.

Der Hohlraum, der zwischen dem Anschlussflansch 5, dem Kolbenflansch 7, der Innenseite des Hohlzylinders 2 und der äußeren Seite des reversibel deformierbaren Bauteils 3 gebildet wird, bildet einen äußeren Druckraum 16.

Des Weiteren wird durch den Innenraum des deformierbaren Bauteils 3 und einen an die Vorrichtung 1 angeschlossenen Behälter ein weiterer Hohlraum geschaffen. Durch eine Druckänderung in diesem Hohlraum kann ebenfalls eine Bewegung des Kolbenflansches 7 bewirkt werden.

Der Druck (beziehungsweise der Unterdruck), der im Druckraum 16 und/oder im Innenraum des Bauteils 3 zur Steuerung aufgebaut werden muss, ist abhängig von der Beschaffenheit der Vorrichtung, insbesondere der Stabilität des Bauteils 3.

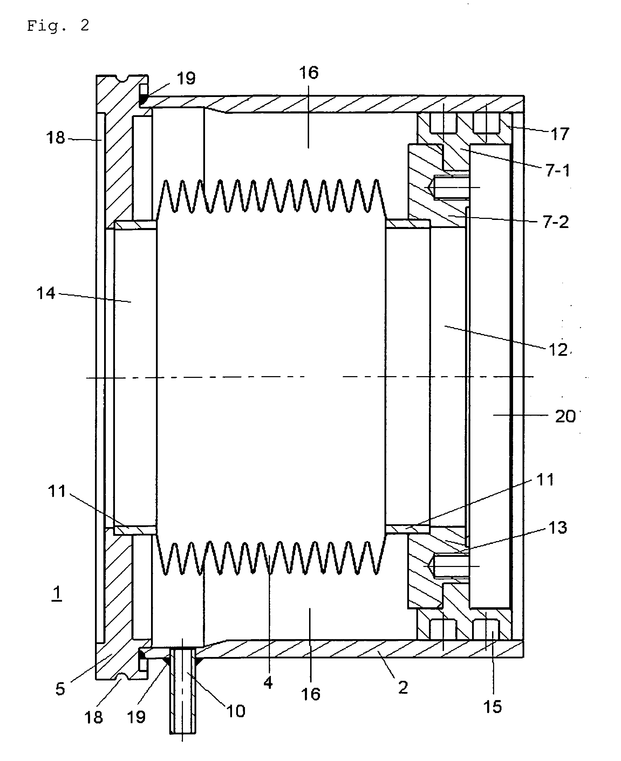

Die Figur 2 zeigt einen Querschnitt durch eine weitere Ausführungsform der erfindungsgemäßen Vorrichtung 1 mit einem Anschlussflansch 5 und einem Kolbenflansch 7.

Der in der Figur 2 gezeigte Anschlussflansch 5 weist eine Aussparung 18 für einen Dichtungsring auf. Bei dieser Ausführungsform besteht der Kolbenflansch 7 aus einem Kolben 7-1 und einem Flansch 7-2. Der Kolben 7-1 weist in dem Bereich, in dem er an der Innenseite des Hohlzylinders 2 anliegt, einen Kolbenring 17 auf, in dem O-Ringe als Dichtungen 15 eingelegt sind. Die Dichtungen schaffen eine druckdichte Verbindung zwischen dem Kolbenring 17 des Kolbens 7-1 und der Innenseite des Hohlzylinders 2. Der Flansch 7-2 weist einen Anschluss 13 zur Aufnahme eines weiteren Flansches 20 auf. Dieser weitere Flansch 20 wird durch die Bewegung des Kolbenflansches 7 im Hohlzylinder 2 koaxial durch die Vorrichtung 1 geführt.

Die Öffnung 10 der in der Figur 2 gezeigten Ausführungsform wird durch ein Rohr verlängert. Das Rohr erleichtert den Anschluss von Leitungen, mit denen die Vorrichtung 1 mit einer Vakuumpumpe verbunden werden kann. Hierzu ist das Rohr mit der Zylinderwand 9 des Hohlzylinders 2 durch eine Schweißnaht 19 druckdicht verbunden.

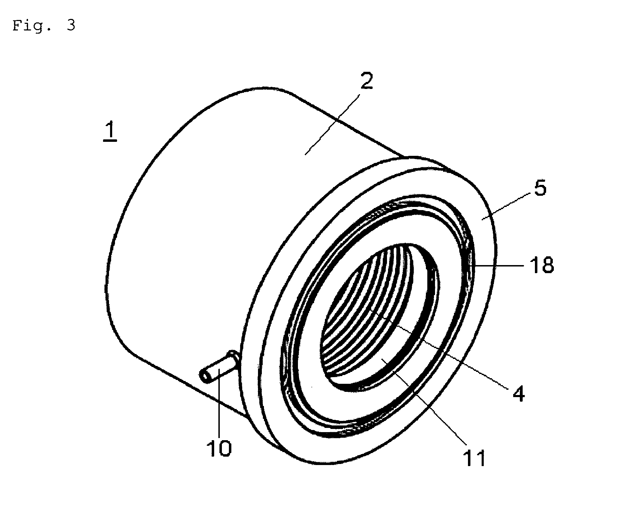

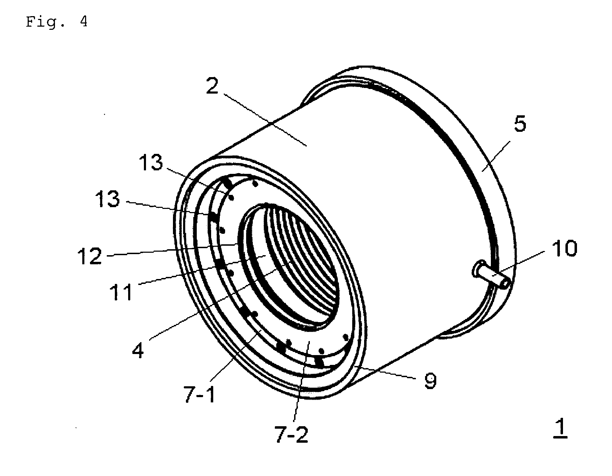

Die Figuren 3 und 4 zeigen dreidimensionale Ansichten der Vorrichtung 1. In der Zylinderwand 9 des Hohlzylinders 2 befindet sich im Bereich zwischen dem Anschlussflansch 5 und dem Kolbenflansch 7 eine Öffnung 10, durch die der Druckraum 16 mit Gas oder einer Flüssigkeit gefüllt beziehungsweise entleert werden kann.

In der Figur 3 wird die Vorrichtung 1 mit dem Anschlussflansch 5 zum Betrachter hin gezeigt. In der in Figur 3 gezeigten Ausführungsform besitzt der Anschlussflansch 5 eine Aussparung 18 zur Aufnahme eines Dichtungsringes.

In der Figur 4 wird die Vorrichtung 1 mit dem Kolbenflansch 7 zum Betrachter hin gezeigt. Der Kolbenflansch 7 besteht aus einem Kolben 7-1 und einem Flansch 7-2.

Der Kolben 7-1 bildet eine druckdichte Verbindung zur Innenseite des Hohlzylinders 2. An der nach außen gerichteten Fläche des Kolbens weist der Kolben 7-1 Anschlüsse 13 zur Befestigung eines weiteren Flansches oder anderer Vorrichtungen auf.

Der Flansch 7-2 weist in seiner Mitte eine Öffnung 12 auf. Die äußere Fläche des Flansches 7-2 ist mit Anschlüssen 13 versehen.

### Bezugszeichenliste:

- 1: Vorrichtung zur Übertragung lineare5 Bewegungen
- 2: Hohlzylinder
- 3: (reversibel deformierbares) Bauteil
- 4: Faltenbalg
- 5: Anschlussflansch
- 6: Rand (der inneren Öffnung)
- 7: Kolbenflansch
- 7-1: Kolben
- 7-2: Flansch
- 8: Stift
- 9: Zylinderwand
- 10: Öffnung
- 11: nicht deformierbares Teil des Bauteils 3
- 12: (äußere) Öffnung
- 13: Anschluss
- 14: (innere) Öffnung
- 15: Dichtung
- 16: (äußerer) Druckraum
- 17: Kolbenring
- 18: Aussparung
- 19: Schweißnaht
- 20: Flansch

## Patentansprüche

1. Vorrichtung (1) zur Übertragung linearer Bewegungen, bestehend aus einem Hohlzylinder (2), in dem sich ein Druckraum (16) befindet,
wobei der Druckraum (16) begrenzt ist durch einen Anschlussflansch (5), der an einer terminalen Öffnung des Hohlzylinders (2) fixiert ist, und einen beweglichen Kolbenflansch (7), der druckdicht an der Innenseite der Zylinderwand des Hohlzylinders (2) anliegt, und
wobei der Anschlussflansch (5) und der Kolbenflansch (7) mittels eines reversibel deformierbaren Bauteils (3) miteinander verbunden sind.

2. Vorrichtung (1) nach Anspruch 1, **dadurch gekennzeichnet, dass** das reversibel deformierbare Bauteil (3) vollständig oder teilweise aus einem reversibel deformierbaren Material besteht.

3. Vorrichtung (1) nach einem der Ansprüche 1 oder 2, **dadurch gekennzeichnet, dass** das reversibel deformierbare Bauteil (3) ein Faltenbalg (4) ist.

4. Vorrichtung (1) nach einem der Ansprüche 1 bis 3, **dadurch gekennzeichnet, dass** das reversibel deformierbare Bauteil (3) aus mindestens drei Teilen besteht, wobei zwei nicht deformierbare Teile jeweils mit einem Ende eines deformierbaren Teils verbunden sind und ein nicht deformierbares Teil mit dem Anschlussflansch (5) und das zweite nicht deformierbare Teil mit dem beweglichen Kolbenflansch (7) verbunden ist.

5. Vorrichtung (1) nach einem der Ansprüche 1 bis 4, **dadurch gekennzeichnet, dass** die Vorrichtung (1) mittels des Anschlussflansches (5) oder eines terminalen Endes des Hohlzylinders (2) an einem Behälter fixierbar ist.

6. Vorrichtung (1) nach Anspruch 5, **dadurch gekennzeichnet, dass** der Behälter eine Vakuumkammer ist.

7. Vorrichtung (1) nach einem der Ansprüche 1 bis 6, **dadurch gekennzeichnet, dass** der Anschlussflansch (5) eine Öffnung (14) aufweist.

8. Vorrichtung (1) nach einem der Ansprüche 1 bis 7, **dadurch gekennzeichnet, dass** der Kolbenflansch (7) eine Öffnung (12) aufweist.

9. Vorrichtung (1) nach einem der Ansprüche 1 bis 8, **dadurch gekennzeichnet, dass** am Kolbenflansch (7) mindestens ein Anschluss (13) vorgesehen ist.

10. Vorrichtung (1) nach Anspruch 9, **dadurch gekennzeichnet, dass** der Anschluss (13) ein Gewinde, eine Steckverbindung, ein Bajonettverschluss, eine Verschraubung oder eine andere lösbare Verbindung ist.

11. Vorrichtung (1) nach einem der Ansprüche 1 bis 10, **dadurch gekennzeichnet, dass** der Kolbenflansch (7) aus einem Kolben (7-1) und mindestens einem Flansch (7-2) besteht.

12. Vorrichtung (1) nach einem der Ansprüche 1 bis 11, **dadurch gekennzeichnet, dass** die Zylinderwand (9) des Hohlzylinders (2) im Bereich des Druckraumes (16) eine Öffnung (10) aufweist.

13. Verfahren zur Übertragung einer linearen Bewegung mittels einer Vorrichtung nach einem der voranstehenden Ansprüche, wobei man durch eine Änderung der Druckverhältnisse im Druckraum (16) und/oder im Innenraum des reversibel deformierbaren Bauteils (3) und/oder im Innenraum eines an die Vorrichtung (1) angeschlossenen Behälters eine Bewegung des Kolbenflansches (7) im Hohlzylinder (2) erzeugt.

14. Verfahren nach Anspruch 13, **dadurch gekennzeichnet, dass** man die Änderungen der Druckverhältnisse im Druckraum (16) durch Absaugen von oder Beaufschlagen mit Gas oder einer Flüssigkeit durch die Öffnung (10) in der Zylinderwand (9) hindurch erzeugt.

15. Verfahren nach Anspruch 13 oder 14, **dadurch gekennzeichnet, dass** man die Geschwindigkeit und Richtung der linearen Bewegung über die Einstellung des Drucks im Druckraum (16) steuert.

16. Verfahren nach Anspruch 15 oder 16, **dadurch gekennzeichnet, dass** man die Geschwindigkeit und Richtung der linearen Bewegung, über die Einstellung des Drucks im Innenraum des reversibel deformierbaren Bauteils (3) und/oder im Innenraum eines an die Vorrichtung (1) angeschlossenen Behälters, steuert.

17. Verwendung der Vorrichtung (1) nach einem der vorhergehenden Ansprüche zur Übertragung von linearen Bewegungen in Vakuumapparaturen.
